# EUROPEAN PATENT SPECIFICATION

(11) **EP 2 759 701 B1**
(45) Date of publication and mention of the grant of the patent: **17.08.2016**
(21) Application number: 12833851.4
(22) Date of filing: 14.09.2012
(51) Int. Cl.: F03D 80/00

(54) **Power generating apparatus of renewable energy type**
Vorrichtung zur Stromerzeugung aus erneuerbarer Energie
Appareil de génération de puissance de type d'énergie renouvelable

(30) Priority: 22.09.2011 WO PCT/JP2011/071674; 30.11.2011 WO PCT/JP2011/006695; 15.02.2012 WO PCT/JP2012/001004; 29.06.2012 WO PCT/JP2012/004219; 29.06.2012 WO PCT/JP2012/004218; 10.08.2012 WO PCT/JP2012/070492
(43) Date of publication of application: 30.07.2014
(73) Proprietor: Mitsubishi Heavy Industries, Ltd., Tokyo 108-8215 (JP)
(72) Inventor: KAMEDA, Takuro, Tokyo 108-8215 (JP); FURUKAWA, Syogo, Tokyo 108-8215 (JP)
(74) Representative: Intès, Didier Gérard André
(86) International application number: PCT/JP2012/073589
(87) International publication number: WO 2013/042621

(56) References cited:
- WO-A2-2010/070450
- WO-A2-2011/104544
- JP-A- 2009 513 882
- US-A1- 2011 012 365

## Description

### [Technical Field]

This invention relates to a power generating apparatus of a renewable energy type which generates electric power from a renewable energy. Herein, a power generating apparatus of a renewable energy type is a power generating apparatus utilizing a renewable energy such as wind, tidal current, ocean current, or river current. An example is a wind turbine generator, a tidal current generator, an ocean current generator, or a river current generator.

### [Background Art]

Recently, a power generating apparatus of a renewable energy type which includes a wind turbine generator utilizing wind and other generators utilizing tidal current, ocean current, or river current has become popular from the perspective or preserving the environment. In a power generating apparatus of a renewable energy type, a motion energy of wind, tidal current, ocean current, or river current is converted into a rotational energy of a rotor, and then the rotational energy of the rotor is converted into electrical power by a generator.

Such a power generating apparatus of a renewable energy type includes a nacelle supported rotatably at the upper end of a tower. In the nacelle, for instance, equipments such as a rotation shaft which rotates with a hub and a blade, a drive train which transmits the rotation of the rotation shaft to the generator, etc are provided.

For instance, in Patent Documents 1 to 7, a nacelle structure composed of a plurality of units is disclosed. Also, in Patent Documents 5 to 7, disclosed is a nacelle structure including a nacelle base plate attached to a tower via a yaw bearing and a frame provided so as to surround equipments housed in the nacelle.

### [Citation List]

### [Patent Literature]

[Patent Document 1]
   EP2375066A
[Patent Document 2]
   US2011/0097202A
[Patent Document 3]
   WO2011/117005A
[Patent Document 4]
   WO2011/051272
[Patent Document 5]
   EP2196668A
[Patent Document 6]
   EP2317137A
[Patent Document 7]
   WO1997/03288A

### SUMMARY

### [Technical Problem]

A nacelle of a power generating apparatus of a renewable energy type is required to have the stiffness which enables not only supporting the own weight of equipments housed in the nacelle, but also withstanding load of each component transmitted to the rotation shaft from the renewable energy source. Especially in recent years, as a power generating apparatus of a renewable energy type has been grown in size and the load transmitted from the rotational shaft to the nacelle tends to increase, it is desirable to improve stiffness of the nacelle. On the other hand, decreasing weight of the nacelle does not only reduce the manufacturing cost of the nacelle but also makes it easier to design the tower, which leads to reduction of the manufacturing cost of the power generating apparatus of a renewable energy type as a whole.

Therefore, it is required to secure stiffness and reduce weight of the nacelle simultaneously.

In this regard, wind turbine generators described in Patent Documents 1 to 7 are not provided with sufficient measures to balance securing stiffness and reducing weight of the nacelle.

For example, Patent Document 7 discloses a wind turbine generator with a configuration in which a rotation shaft and a gear box are provided on a nacelle base plate directly supported on the tower. However, this wind turbine generator adopts a gear box as a drive train and thus load of the rotation shaft is transmitted to the generator via the gear box, which requires high stiffness also at an area in the nacelle where the nacelle is supported. As a result, there is a limitation in reducing weight of the nacelle as a whole. WO2007/053036 discloses another prior art wind turbine.

An object of at least one embodiment of the present invention is to provide a power generating apparatus of a renewable energy type which enables reducing weight of a nacelle while maintaining such stiffness of the nacelle that enables withstanding load of each component transmitted to a rotation shaft from the renewable energy source.

### [Solution to Problem]

A power generating apparatus of renewable energy type according to one embodiment of the present invention is a power generating apparatus of a renewable energy type which generates power using renewable energy and comprises:
a tower;
at least one blade;
a hub to which the at least one blade is attached;
a rotation shaft connected to the hub;
a nacelle including a nacelle base plate attached to the tower and a common base plate formed separately from the nacelle base plate and supported by the nacelle base plate;
a main bearing supporting the rotation shaft rotatably to the nacelle base plate;
a hydraulic pump attached to the rotation shaft and configured to produce pressurized oil by rotation of the rotation shaft;
a hydraulic motor configured to be driven by the pressurized oil from the hydraulic pump; and
a generator configured to be driven by the hydraulic motor,
wherein the hydraulic motor and the generator are installed on the common base plate.

For the above power generating apparatus of a renewable energy type, a common base plate where a hydraulic motor and a generator are disposed is provided separately from a nacelle base plate where a rotation shaft is supported via a main bearing. As a result, it is possible to reduce weight of the nacelle as a whole. That is, as a shafting at the hydraulic motor side (the output axis of the hydraulic motor) is separated from another shafting at the hydraulic pump side including the rotation shaft, load of each component transmitted to the rotation shaft from the renewable energy source is transmitted to the tower via the main bearing and the nacelle base plate, but not to the shafting at the hydraulic motor side. As a result, it is possible to reduce weight of the common base plate and the structure which supports the common base plate on the nacelle base plate, and thus to reduce weight of the nacelle as a whole without impairing stiffness for withstanding load of each component transmitted to the rotation shaft from the renewable energy source.

Further, as a result of installing both of the hydraulic motor and the generator on a same plate (the common base plate), a moment in an opposite direction to the rotational direction of the output axis of the hydraulic motor acts on the common base plate from the hydraulic motor, and another moment in the same direction as the rotational direction of the output axis acts on the common base plate from the generator as well. As the moments acting on the common base plate from the hydraulic motor and the generator respectively in opposite directions cancel each other, the loads which act on the common base plate and the structure supporting the common base plate on the nacelle base plate is mainly own weight of each of the hydraulic motor and the generator only. As a result, it is possible to reduce weight of the common base plate and the structure which supports the common base plate on the nacelle base plate, and thus to further reduce weight of the nacelle as a whole.

In some embodiments, the power generating apparatus of renewable energy type may further comprise:
a yaw deck protruding sideways from the nacelle base plate;
a yaw bearing disposed between the tower and the nacelle base plate; and
a yaw driving mechanism disposed on the yaw deck and configured to rotate the nacelle base plate in a yaw direction with respect to the tower,
wherein the common base plate is disposed at a higher position than the yaw deck, and
wherein the yaw deck may form a first floor where the yaw driving mechanism is provided, and the common base plate may form a second floor where at least the hydraulic motor and the generator are provided, the second floor being disposed above the first floor.

Generally, a yaw driving mechanism is disposed near a yaw bearing. On the other hand, as a hydraulic motor is connected to a hydraulic pump by piping, the degree of freedom in arranging the hydraulic motor and the generator is relatively high. Thus, by disposing the common base plate where the hydraulic motor and the generator are installed at a higher position than the yaw deck where the yaw driving mechanism is disposed, it is possible to efficiently use the space inside the nacelle.

In some embodiments, the nacelle may have a multiple-layered structure which includes the first floor and the second floor, and further include a nacelle frame attached to the nacelle base plate.

By adopting a nacelle with a multiple-layered structure as described above, it is possible to efficiently use the space within the nacelle. Also, attaching a nacelle frame to the nacelle base plate makes it possible to easily attain a multiple-layered structure.

In some embodiments, the nacelle base plate may include a horizontal part which extends horizontally, a wall part which is provided on the horizontal part and which has a pair of inner wall surfaces of the wall part facing each other across the rotation shaft, and a rib provided between the pair of inner wall surfaces of the wall part to extend along a perpendicular direction of an axial direction of the rotation shaft, wherein the rib has an opening for providing access to a maintenance space surrounded by the horizontal part, the wall part and the rib.

By forming a maintenance space inside the nacelle base plate, it is possible for a worker to enter the maintenance space from the opening for providing access to the maintenance space, and to easily perform maintenance of the equipments such as a yaw bearing disposed at a lower position of the nacelle base plate and a main bearing attached to an upper part of the nacelle base plate.

In some embodiments, the nacelle may further include a side nacelle frame which is attached to the nacelle base plate and which forms a maintenance space for the rotation shaft beside the rotation shaft.

By forming a maintenance space beside the rotation shaft by a side nacelle frame, it is possible to easily perform maintenance of the rotation shaft. Also, as the side nacelle frame is formed separately from the nacelle base plate, load from the rotation shaft is not transmitted to the side nacelle frame directly. As a result, the side nacelle frame is not required to have stiffness as high as the nacelle base plate, and thus it is possible to reduce weight of the side nacelle frame.

In some embodiments, a power generating apparatus of renewable energy type may further comprise a brake mechanism including a brake disc fastened to the hub and the rotation shaft, and a brake caliper attached to a bearing housing which houses the main bearing and configured to force a brake pad against the brake disc to apply a braking force to the rotation shaft,
wherein the nacelle includes a front nacelle frame attached to the nacelle base plate so as to protrude to a front side of the brake disc, the front nacelle frame forming a maintenance space for the brake mechanism.

Hereinafter, "front" is referred to as the hub side and "rear" is referred to as the hydraulic pump side in the axial direction of the rotation shaft which extends toward the hydraulic pump from the hub.

In the power generating apparatus of a renewable energy type, as a brake mechanism is disposed at a front end of the nacelle, it is difficult for a worker to access from the nacelle base plate upon performing maintenance of the brake mechanism. By attaching a front nacelle frame which protrudes to a front side of the brake disc to the nacelle base plate, a maintenance space for the brake mechanism is formed and thus it is possible to easily perform maintenance of the brake mechanism.

In some embodiments, the nacelle may include a rear nacelle frame attached to the nacelle base plate so as to protrude to a rear side of the nacelle, and the rear nacelle frame may be fastened to a flange face formed at a rear part of the nacelle base plate by a bolt.

In this case, the nacelle may include a rear floor plate which is supported by the nacelle frame so as to form a rear floor in the nacelle.

In this manner, a rear nacelle frame is fastened to a flange face formed at a rear part of the nacelle and a space is formed at the rear part of the nacelle by the rear nacelle frame and a rear floor. As a result, it is possible to dispose equipments at the rear part of the nacelle. Also, as the rear nacelle frame is formed separately from the nacelle base plate, load from the rotation shaft is not transmitted directly to the rear nacelle frame. Therefore, the rear nacelle frame is not required to have stiffness as high as the nacelle base plate and thus it is possible to reduce weight of the rear nacelle frame.

In some embodiments, the main bearing includes a pair of a front bearing and a rear bearing disposed between the hub and the hydraulic pump and further includes a connection frame for connecting the front bearing at a side close to the hub and the rear bearing at a side close to the hydraulic pump,
wherein the connection frame is attached to the nacelle base plate.

Herein, each of the front bearing and the rear bearing includes an inner race, an outer race, a bearing such as a rolling element, and a bearing housing.

Each of the front bearing and the rear bearing supporting the rotation shaft is supported by the nacelle base plate at a lower side and is connected to each other by a connection frame. Thus, as the bearing housing of each of the bearings is fixed by the nacelle base plate and the connection frame, it is possible to keep the bearings concentric with each other.

In some embodiments, the connection frame may include an attachment part for a crane for lifting up and down an equipment which is to be housed in the nacelle.

The connection frame is supported on the nacelle base plate via the main bearing. Normally, the main bearing and the nacelle base plate are designed to have high stiffness for supporting the rotation shaft. Accordingly, attaching a crane to the connection frame makes it even possible to lift up and down an equipment of heavy weight.

In some embodiments, the nacelle may be configured to be openable at a ceiling of the nacelle above the nacelle base plate.

In this manner, by opening a ceiling of the nacelle above the nacelle base plate, it is possible to easily perform transportation of equipments to be housed in the nacelle upon installation, destruction, or maintenance of a renewable energy generator. For instance, in the case where an equipment is lifted and transferred by a crane attached to the connection frame, opening the ceiling makes it easier to attach the crane to the connection frame, thus enabling transportation of equipments between inside and outside of the nacelle. Especially, even large equipments such as the hydraulic pump and the generator provided on the nacelle base plate can be transferred.

In some embodiments, the ceiling may include at least one opening which communicates with outside and which is used for maintaining the equipment housed in the nacelle.

As a result, upon performing maintenance of equipments housed in the nacelle, it is possible to transfer equipments between inside and outside of the nacelle via the opening.

In some embodiment, the ceiling may include at least one opening and at least one cover for closing the opening, and the at least one cover may be configured slidable so as to open the at least one opening when lifting up and down an equipment which is to be housed in the nacelle by a crane.

As a result, by providing a slidable cover at an opening, even an opening of a renewable energy generator of large size can be easily opened and closed.

In some embodiments, an access deck for providing access for a helicopter may be provided at an upper face of the nacelle.

In a power generating apparatus of a renewable energy type where a nacelle is installed on an upper end of a tower, a helicopter is occasionally used for carrying equipments into and out from inside of the nacelle. Herein, providing an access deck at an upper face of the nacelle makes it easier to carry equipments in and out. For instance, it is possible to lift down and place an equipment once on the deck at the upper face of the nacelle while a helicopter is hovering and then carry the equipment into the nacelle through the opening at the ceiling of the nacelle.

In some embodiments, a power generating apparatus of renewable energy type may further comprise at least one cooling duct attached to a rear part of the nacelle at a side further from the hub, and the cooling duct may be supported by the nacelle frame.

In a nacelle, a plurality of heat sources such as a hydraulic pump and a generator exists. Thus, by providing a cooling duct, it is possible to release the heat generated from the heat sources to the outside of the nacelle. Also, as equipments such as a main bearing of a rotation shaft and a hydraulic pump are provided at the front to the middle of the nacelle, supporting the cooling duct by the nacelle frame at the rear part of the nacelle makes it possible to prevent the nacelle from increasing in size.

In some embodiments, the nacelle may further include a nacelle frame which is attached to the nacelle base plate and which supports at least the common base plate and a nacelle cover disposed so as to cover an equipment housed in the nacelle.

In this manner, by attaching the common base plate and the nacelle cover to the nacelle frame, the degree of freedom for the arrangement is improved compared to the case where the common base plate and the nacelle cover are directly attached to the nacelle base plate.

In some embodiments, the nacelle cover may be formed of one or more materials selected from the group consisting of fiber-reinforced plastic, aluminum, and alloyed aluminum.

As a result, it is possible to reduce weight of the nacelle cover.

In some embodiments, the nacelle base plate may be formed by casting.

As a result, it is even possible to manufacture a nacelle base plate of a complicated shape so that the nacelle base plate has high stiffness.

In some embodiments, the nacelle frame may be formed of mold steel.

As a result, it is possible to support an equipment of heavy weight by the nacelle frame.

### [Advantageous Effects]

According to at least one embodiment of the present invention, as a common base plate where a hydraulic motor and a generator are disposed is provided separately from a nacelle base plate where a rotation shaft is supported via a main bearing, it is possible to reduce weight of the nacelle as a whole.

Also, by installing both of the hydraulic motor and the generator on a same plate (the common base plate), the moments acting on the common base plate in opposite directions from the hydraulic motor and the generator respectively cancel each other. As a result, it is possible to reduce weight of the common base plate and the structure which supports the common base plate on the nacelle base plate, and thus to further reduce weight of the nacelle as a whole.

### BRIEF DESCRIPTION OF DRAWINGS

[FIG.1] Fig. 1 is a schematic view of an overall configuration of a wind turbine generator according to one embodiment.
[FIG. 2] Fig. 2 is an oblique perspective view of an exemplary configuration inside a nacelle of a wind turbine generator according to one embodiment.
[FIG. 3] Fig. 3 is of an oblique perspective view of an exemplary configuration of a nacelle base plate according to one embodiment.
[FIG. 4] Fig. 4 is a plan view of an exemplary configuration inside a nacelle of a wind turbine generator according to one embodiment.
[FIG. 5] Fig. 5 is a cross-sectional view along the line A-A of Fig. 4.
[FIG. 6] Fig. 6 is a side view of an exemplary configuration inside a nacelle of a wind turbine generator according to one embodiment.
[FIG. 7] Fig. 7 is an illustration explaining moments acting on a common base plate.
[FIG. 8] Fig. 8 is an illustration of a detail structure around a brake disc.
[FIG. 9] Fig. 9 is an oblique perspective view of a nacelle to which a nacelle cover is attached.
[FIG. 10] Fig. 10 is an oblique perspective view of a nacelle to which a crane is attached.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

In the following embodiments, a wind turbine generator is described as an example of a power generating apparatus of a renewable energy type. However, the present invention can be applied to other power generating apparatuses of a renewable energy type such as a tidal current generator, an ocean current generator, and a river current generator.

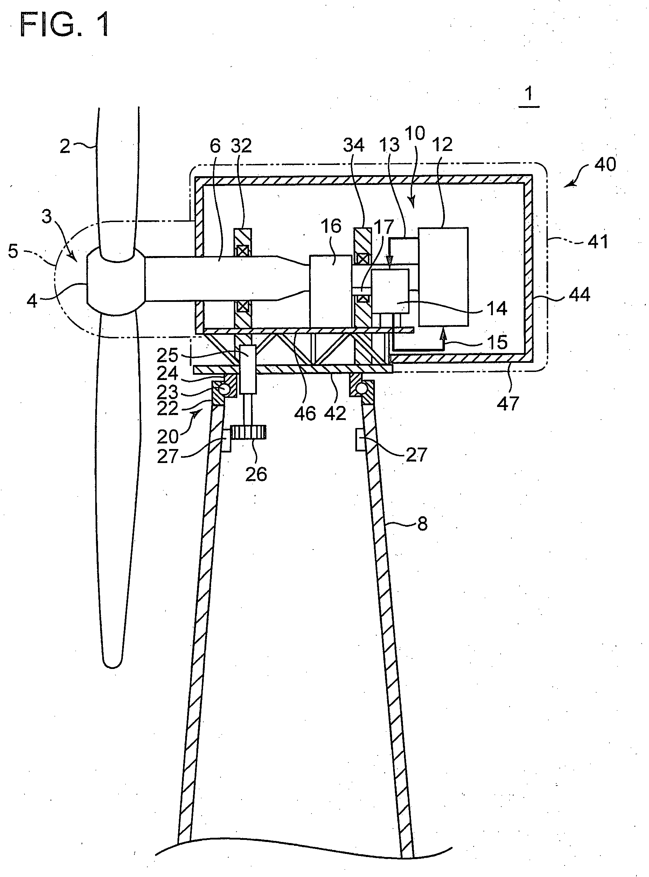

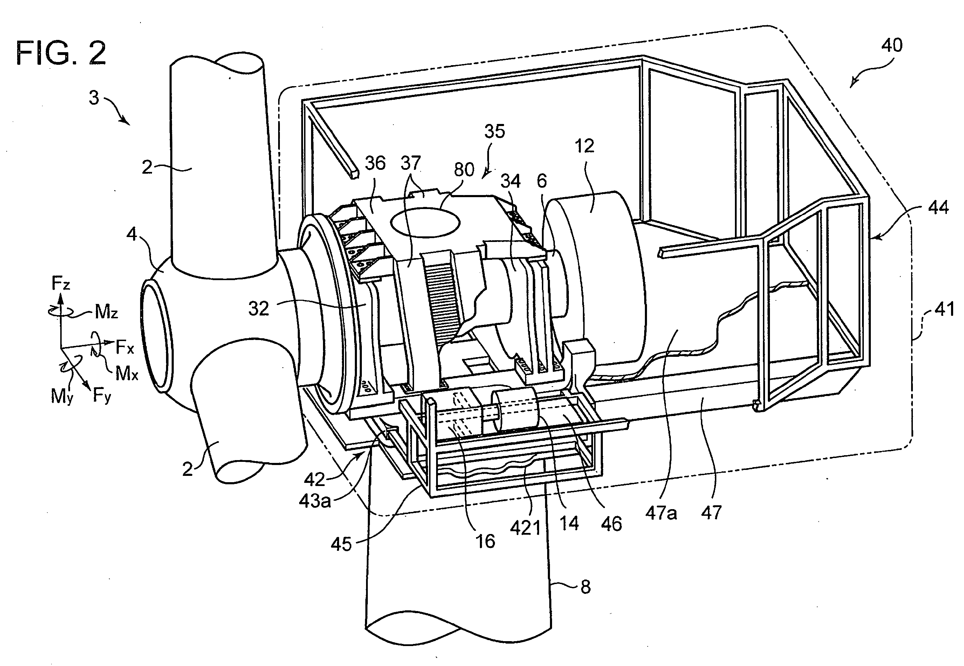

Fig. 1 is schematic view of an overall configuration of a wind turbine generator according to one embodiment. Fig. 2 is an oblique perspective view of an exemplary configuration inside a nacelle of a wind turbine generator according to one embodiment.

As shown in Fig. 1, a wind turbine generator 1 includes a rotor 3 composed of a blade 2 and a hub 4, a rotation shaft 6 connected to a hub 4 of the rotor 3, a generator 16 which generates electricity, and a hydraulic transmission 10 which transmits a rotational energy of the rotation shaft 6 to the generator 16.

The hub 4 is covered by a hub cover 5. At least one of the rotation shaft 6 and the hydraulic transmission 10 is housed in a nacelle 40 disposed on a tower 8 vertically provided on an ocean or a ground.

As shown in Fig. 1 and Fig. 2, the nacelle 40 includes a nacelle base plate 42 attached to the tower 8 and a common base plate 46 which is formed separately from the nacelle base plate 42 and which is supported by the nacelle base plate 42. A main bearing which rotatably supports the rotation shaft 6 is attached to the nacelle base plate 42. On the other hand, a hydraulic motor 14 and the generator 16 are installed on the common base plate 46.

As shown in Fig. 1, the nacelle base plate 42 is supported by the tower 8 rotatably in the yaw direction with respect to the tower 8. In one embodiment, a yaw bearing 20 is provided between the tower 8 and the nacelle base plate 42. The yaw bearing 20 includes an outer race 22 fixed to the side of the tower 8, an inner race 24 fixed to the nacelle base plate 42, and a rolling element 23 disposed between the outer race 22 and the inner race 24. Also, a ring gear 27 is provided for the tower 8, and a pinion gear 26 which engages with the ring gear 27 is provided for the nacelle base plate 42. A yaw motor 25 is attached to the pinion gear 26. Thus, when the yaw motor 25 is driven and the pinion gear 26 is rotated, the nacelle base plate 42 supported on the tower 8 via the yaw bearing 20 rotates.

A main bearing attached to the nacelle base plate 42 may include a configuration described below.

In one embodiment, a main bearing includes a front bearing 32 and a rear bearing 34 attached to the rotation shaft. Each of the front bearing 32 and the rear bearing 34 has an inner race, an outer race, a bearing such as a rolling element, and a bearing housing. While the drawing illustrates a main bearing including the front bearing 32 and the rear bearing 34, the number of the bearings is not limited and required to be at least one.

As shown in Fig. 2, the front bearing 32 and the rear bearing 34 may be connected to each other by a connection frame 35. The connection frame 35 may include: a connection plate 36 which is provided at a higher position than the rotation shaft 36 and which connects upper parts of the bearings 32, 34; and a pair of supports 37 which supports the connection plate 36 on the nacelle base plate 42 at both sides of the rotation shaft 6. As a result, it is possible to connect upper parts of the bearings 32, 34 with each other by the connection plate 36 and thus to contribute to keeping the bearings 32, 34 concentric with each other. Also, the connection frame 35 may include a crane attachment part 80. A crane for transportation of equipments to be housed in the nacelle 40 is attached to the crane attachment part 80. As a result, even in the case where a crane is attached to the crane attachment part 80, load of the crane is supported by the nacelle base plate 42 via the supports 37.

The crane attachment part 80 may be configured so that it is possible to fix a jib of the crane using an arbitrary fastening member. Attachment of a crane will be later described in detail.

Herein, a hydraulic transmission 10 disposed in the nacelle 40 is described.

In one embodiment, as shown in Fig. 1, a hydraulic transmission 10 includes a hydraulic pump 12 attached to the rotation shaft 6 and a hydraulic motor 14 connected to the hydraulic pump 12 via a high pressure oil line 13 and a low pressure oil line 15. The hydraulic pump 12 is driven by the rotation shaft 6 and compresses operating oil, thereby producing high pressure operating oil (pressurized oil). The outlet of the hydraulic pump 12 is connected to the inlet of the hydraulic motor 14 via the high pressure oil line 13. Thus, the pressurized oil generated in the hydraulic pump 12 is supplied to the hydraulic motor 14 via the high pressure oil line 13, and then the hydraulic motor 14 is driven by the pressurized oil. The low pressure working oil after having performed work in the hydraulic motor 14 is again returned to the hydraulic pump 12 via the low pressure oil line 15 provided between the outlet of the hydraulic motor 14 and the inlet of the hydraulic pump 12. Also, an output axis of the hydraulic motor 14 is connected to the rotation shaft of the generator 16 so that rotation of the hydraulic motor 14 is inputted into the generator 16.

The number of each of the hydraulic pump 12, the hydraulic motor 14 and the generator 16 is not particularly limited and required to be at least one.

The hydraulic pump 12 is attached to an end of the rotation shaft 6 supported on the nacelle base plate 42 via a main bearing. Further, the hydraulic pump 12 may be supported on the nacelle base plate 42 by a torque support not shown in the drawing. In this case, the torque support may be configured to apply a reaction torque to the hydraulic pump 12 from the rotation shaft 6 while allowing displacement of the hydraulic pump 12 and also to support the hydraulic pump 12 on the nacelle base plate 42.

The output axis 17 of the hydraulic motor 14 is connected to the generator 16, and the hydraulic motor 14 and the generator 16 are installed on the common base plate 46 under the state of being connected to each other via the output axis 17. The common base plate 46 is formed separately from the nacelle base plate 42 and is supported on the nacelle base plate 42 via the nacelle frame 44. The common base plate 46 is supported on the tower 8 via the nacelle base plate 42 and thus not directly connected to the tower 8. Also, the common base plate 46 may be supported on the nacelle base plate 42 via at least one of an elastic member or a damper mechanism. As a result, it is possible to suppress vibration during motoring of the hydraulic motor 14 and the generator 16 and thus to stably support the hydraulic motor 14 and the generator 16 at the side of the nacelle 40.

According to the above wind turbine generator 1, as the common base plate 46 where the hydraulic motor 14 and the generator 16 are installed is provided separately from the nacelle base plate 42 where the rotation shaft 6 is supported via the main bearing, it is possible to reduce weight of the nacelle as a whole.

As shown in Fig. 2, when the rotor 3 rotates upon receiving wind, a moment Mx around the axial direction of the rotation shaft 6 and moments My, Mz around the perpendicular directions to the axial direction of the rotation shaft 6 (the central axes of the moments My, Mz are perpendicular to each other) act on the rotation shaft 6 from the rotor 3, as well as a load Fx in the axial direction of the rotation shaft 6 and loads Fy, Fz in the perpendicular directions to the axial direction of the rotation shaft 6 (directions of loads Fy, Fz are perpendicular to each other). Among these loads (including the moments), basically, only the moment Mx around the axial direction of the rotation shaft 6 is recovered as an energy in the hydraulic transmission 10. Therefore, loads of other components are transmitted to the tower 8 via the rotation shaft 6. On this occasion, as the shafting at the side of the hydraulic motor 14 (the output axis of the hydraulic motor 14) is separated from the shafting at the side of the hydraulic pump 12 including the rotation shaft 6, load of each component transmitted to the rotation shaft 6 from wind is transmitted to the tower 8 via the main bearing and the nacelle base plate 42, but not to the shafting at the side of the hydraulic motor 14. As a result, it is possible to reduce weight of each of the common base plate 46 and the structure which supports the common base plate 46 to the nacelle base plate 42 (the nacelle frame 44 described below, for instance), and to reduce weight of the nacelle 40 as a whole without damaging the stiffness which enables withstanding load of each component transmitted to the rotation shaft 6 from wind. That is, in contrast to the nacelle base plate 42 which is included in the transmitting route of the load components (including moments) other than the moment Mx transmitted to the tower 8 from the rotation shaft 6, less stiffness compared to the nacelle base plate 42 is sufficient for the common base plate 46, the nacelle frame 44, etc which are not included in the transmitting route. Thus, it is possible to reduce weight of the common base plate 46, the nacelle frame 44, etc.

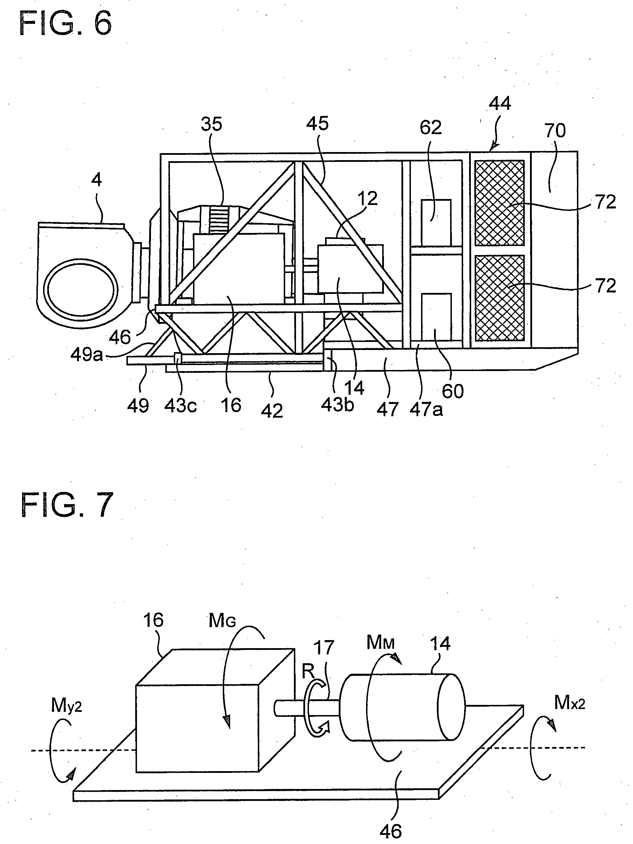

Further, as shown in Fig. 7, as both of the hydraulic motor 14 and the generator 16 are installed on one same plate (the common base plate), a moment M_{M} in the opposite direction to the rotational direction R of the output axis 17 of the hydraulic motor 14 acts on the common base plate 46 from the hydraulic motor 14, and also, a moment M_{G} in the same direction as the rotational direction R of the output axis 17 acts on the common base plate 46 from the generator 16. The moments M_{M} and M_{G} acting on the common base plate 46 in opposite directions from the hydraulic motor 14 and the generator 16 respectively cancel each other. Thus, the only load which acts on the common base plate 46 and the structure supporting the common base plate 46 on the nacelle base plate 42 is mainly the own weight of each of the hydraulic motor 14 and the generator 16. As a result, it is possible to reduce weight of each of the common base plate 46 and the structure supporting the common base plate 46 on the nacelle base plate 42 (the nacelle frame 44 described below, for instance), and to further reduce weight of the nacelle 40 as a whole.

Next, an exemplary configuration of the nacelle 40 is described in detail with reference to Fig. 2 to Fig. 6.

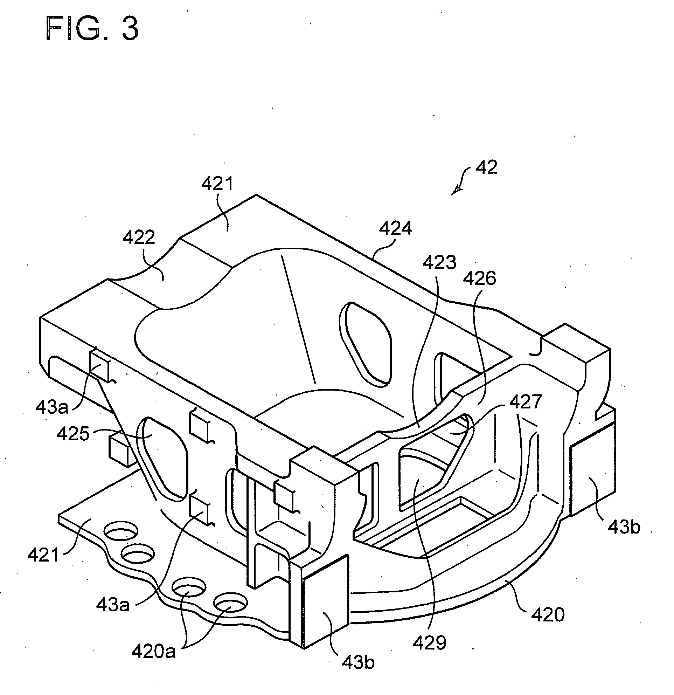

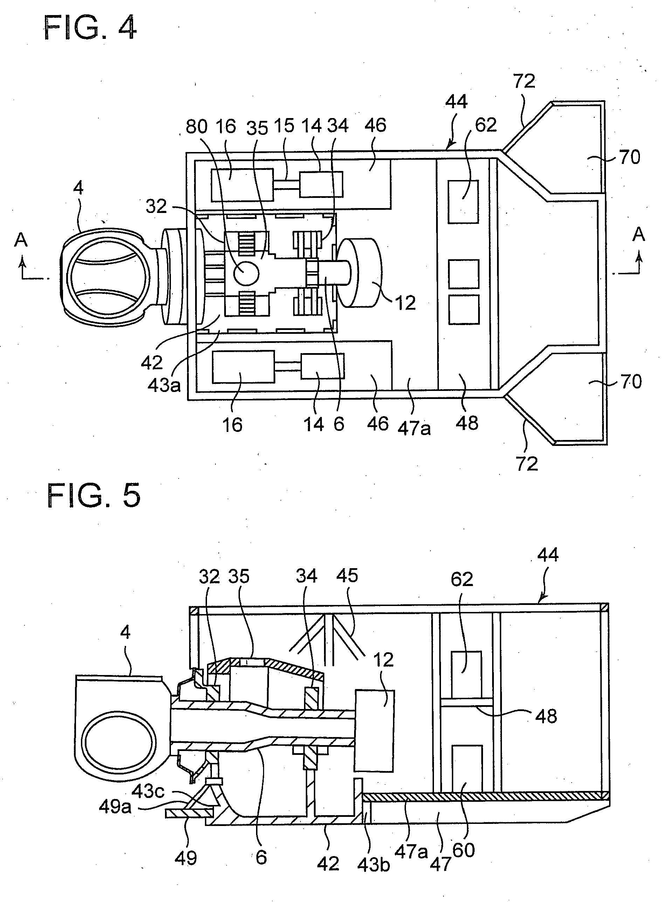

Fig. 3 is of an oblique perspective view of an exemplary configuration of a nacelle base plate according to one embodiment. Fig. 4 is a plan view of an exemplary configuration inside a nacelle of a wind turbine generator according to one embodiment. Fig. 5 is a cross-sectional view along the line A-A of Fig. 4. Fig. 6 is a side view of an exemplary configuration inside a nacelle of a wind turbine generator according to one embodiment.

In the exemplary embodiment shown in Fig. 2, the nacelle 40 includes a nacelle base plate 42 which supports a main bearing, a nacelle frame 44 fixed to the nacelle base plate 42, a common base plate 46 supported on the nacelle base plate 42 via the nacelle frame 44, and a nacelle cover 41 which is attached to the nacelle frame 44 so as to cover an equipment inside the nacelle 40. The nacelle base plate 42 may be configured of a casting such as a ductile cast iron or a high strength cast iron, for instance. The nacelle frame 44 may be formed of a mold steel, for instance. The nacelle cover 41 may be formed of one or more materials selected from the group consisting of fiber-reinforced plastic, aluminum, and alloyed aluminum.

As shown in Fig. 3, the nacelle base plate 42 may include a horizontal part 420 which extends horizontally, a wall part 424 which is vertically provided on the horizontal part 420, and a rib 426 provided between a pair of inner wall surfaces of the wall part 424 to extend along a perpendicular direction of an axial direction of the rotation shaft 6.

A recess 422 is provided for the wall part 424 of the nacelle base plate 42 at a part of a side of the hub 4, the recess 422 being configured so that a lower part the front bearing 32 (specifically, the bearing housing of the front bearing 32) engages with the recess 422. Likewise, a recess 423 is provided for the rib 426, the recess 423 being configured so that a lower part of the rear baring 34 (specifically, the bearing housing of the rear bearing 34) engages with the recess 423. As shown in Fig. 2, the bearings 32, 34 engaging with the recesses 422, 423 are fastened to the nacelle base plate 42 (an upper face of the wall part 424) at both sides of the bearings 32, 34.

Accordingly, a maintenance space surrounded by the horizontal part 420, the wall part 424 and the rib 426 is formed inside the nacelle 40. At least one opening 427 is provided for the rib 426 and the opening 47 allows a worker to access the maintenance space. As described above, by providing the maintenance space inside the nacelle base plate 42, it is possible to easily perform maintenance of equipments such as the yaw bearing 20 disposed at a lower part of the nacelle base plate 42 and the main bearing attached to an upper part of the nacelle base plate 42. An opening 425 may be provided for the wall part 424 as well for a worker to pass through.

A base plate opening 429 may be provided for the horizontal part 420 along the inner periphery of the wall part 424. The base plate opening 429 may be covered by a nacelle deck plate (not shown) used as a scaffold for a worker upon performing maintenance of equipments in the nacelle.

Further, the horizontal part 420 may include a yaw deck 421 protruding outward along a side wall part of the wall part 424 arranged at both sides of the nacelle base plate 42, that is, both sides of the rotation shaft 6. In this case, a holding hole 420a is provided for the yaw deck 421 for holding the yaw motor 25 shown in Fig. 1.

Moreover, a flange may be provided for the nacelle base plate 42, to which a nacelle frame 44 described below is fastened. For instance, a side flange 43a is provided for each of the pair of wall parts 424, 424 disposed at both sides of the rotation shaft 6, a rear flange 43b for the wall part 424 at a rear side, and a front flange 43c (see Fig. 5) for the wall part 424 at the hub side.

Next, an exemplary configuration of a nacelle frame 44 attached to the nacelle base plate 42 is described with reference to Fig. 2 and Fig. 4 to Fig. 6.

In one embodiment, the nacelle frame 44 may include a side nacelle frame 45 attached to a side of the nacelle base plate 42, a rear nacelle frame 47 protruding from a rear side of the nacelle base plate 42 and a front nacelle frame 49 attached to a front of the nacelle base plate 42.

The side nacelle frame 45 is fastened to the side flange 43a (see Fig. 3) provided at the wall part 424 of the nacelle base plate 42 by a fastening member such as a bolt. The side nacelle frame 45 extends from a side to an upper part of the nacelle base plate 42. The side nacelle frame 45 may be configured to form a maintenance space for the rotation shaft 6 beside the rotation shaft 6. As a result, it is possible to easily perform maintenance of the rotation shaft 6. Also, as the side nacelle frame 45 is formed separately from the nacelle base plate 42, load from the rotation shaft 6 is not transmitted directly to the nacelle frame 45. Thus, the side nacelle frame 45 is not required to have as high stiffness as the nacelle base plate 42, which enables reducing weight of the side nacelle frame 45.

Further, a common base plate 46 where the hydraulic motor 14 and the generator 16 are installed may be attached to the side nacelle frame 45. On this occasion, the common base plate 46 may be disposed at a higher position than the yaw deck 421. That is, the yaw deck forms a first floor where the yaw motor 25 is provided, and the common base plate 46 forms a second floor where the hydraulic motor 14 and the generator 16 are provided, the second floor being disposed above the first floor. By disposing the common base plate 46 where the hydraulic motor 14 and the generator 16 are installed at a higher position than the yaw deck 421 where the yaw motor 25 is disposed, it is possible to use the space in the nacelle 40 efficiently upon arranging equipments in the nacelle 40.

Moreover, the nacelle frame 44 may be configured to form a multiple-layered structure including the first floor and the second floor. As a result, it is possible to efficiently use the space inside the nacelle 40 by forming the nacelle 40 as a multiple-layered structure. Also, it is possible to easily attain the multiple-layered structure by attaching the nacelle frame 44 to the nacelle plate 42.

The rear nacelle frame 47 is fastened to the rear flange 43b (see Fig. 3 and Fig. 5) of the nacelle base plate 42 by a fastening member such as a blot. A rear floor plate 47a is attached to the rear nacelle frame 47. A rear floor is formed at a rear side of the nacelle 40 by the rear nacelle frame 47 and the rear floor plate 47a. As a result, by forming a space by the rear nacelle frame 47 and the rear floor plate 47a at a rear part of the nacelle, it is possible to place a variety of equipments at the rear part of the nacelle. Also, as the rear nacelle frame 47 is formed separately from the nacelle base plate 42, load from the rotation shaft 6 is not transmitted directly to the rear nacelle frame 47. Thus, the rear nacelle frame 47 is not required to have as high stiffness as the nacelle base plate 42, which enables reducing weight of the rear nacelle frame 47.

On this occasion, a nacelle frame 44 which extends vertically from the rear floor plate 47a may be provided, and an equipment base plate 48 may be attached to the nacelle frame 44. A variety of equipments to be housed in the nacelle 40 is disposed on the equipment base plate 48. As a result, by adopting a multiple-layered structure at the rear part of the nacelle 40 by the equipment base plate 48, it is possible to efficiently use the space inside the nacelle 40 upon arranging equipments in the nacelle 40. A hydraulic tank, an accumulator, and a cooling water supplying unit can be named as an example of the equipment disposed on the equipment base plate 48.

The front nacelle frame 49 is fastened to the front flange (see Fig. 5) provided at the front part of the nacelle 42 by a fastening member such as a blot. The front nacelle frame 49 forms a maintenance space for the brake mechanism. A beam 49a which connects the front nacelle frame 49 to the nacelle base plate 42 may be provided for the purpose of supporting the own weight of the front nacelle frame 49.

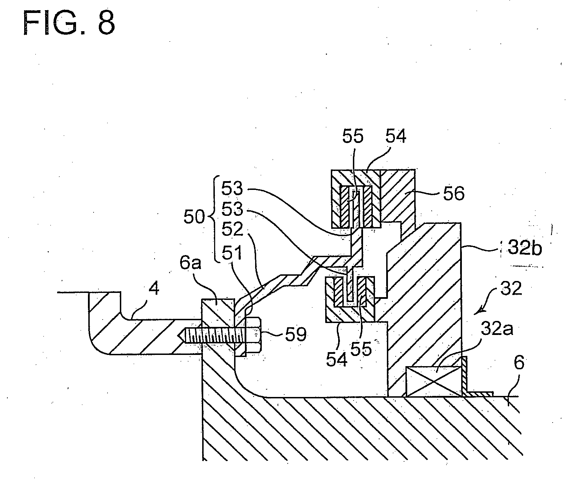

An exemplary configuration of a brake mechanism is described herein with reference to Fig. 8, which is an illustration of a detail structure around a brake mechanism.

In one embodiment, a brake mechanism includes a brake disc 50 and a brake caliper 54.

The brake disc 50 includes a fastened part 51 which is fastened to the hub 4 and the flange 6a by a bolt 59, an intermediate part 52 which is bended and extends from the fastened part 51 toward the front bearing 32, and a disc part 53 provided at an end of the intermediate part 52. The front bearing 32 includes a bearing body 32a and a bearing housing 32b.

The brake caliper 54 forces a brake pad 55 against the brake disc 50 attached to the bearing housing 32b via a supporting member 56 so as to apply a braking force to the rotation shaft 6.

As the brake mechanism having the above configuration is disposed at a front end of the nacelle 40, is difficult for a worker to access from the nacelle base plate 42 upon maintenance of the brake mechanism. Thus, by attaching the front nacelle frame 49 which protrudes from the front of the brake disc 50 to the nacelle base plate 42, it is possible to easily perform maintenance of the brake mechanism.

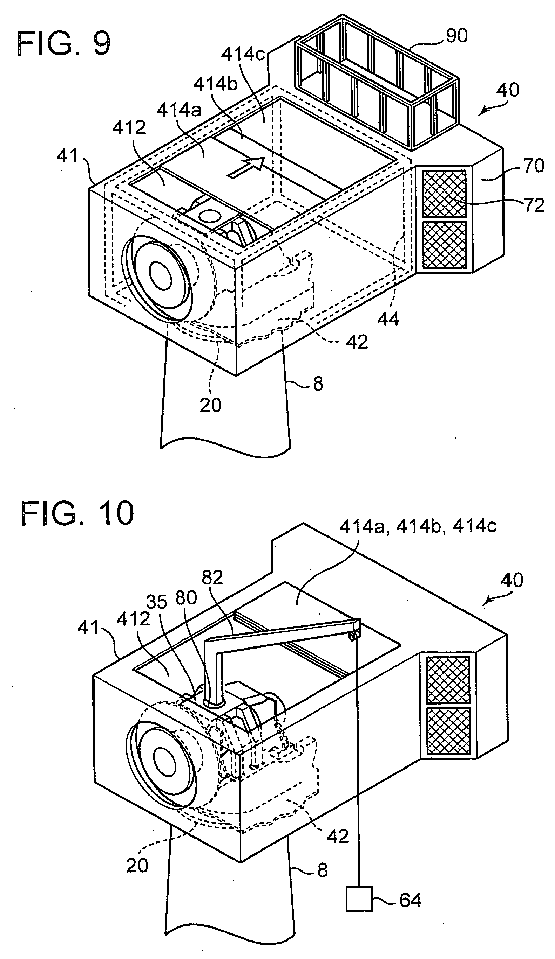

Fig. 9 is an oblique perspective view of a nacelle to which a nacelle cover is attached.

In one embodiment, the nacelle 40 may be configured so that the ceiling above the nacelle base plate 42 is openable. For instance, as shown in Fig. 9, an opening 412 is provided at an upper surface of the nacelle cover 41, and at least one slide plate is provided corresponding to the opening 412. In the drawing, a case where three slide plates 414a to 414c are provided is illustrated. By sliding the slide plates 414a to 414c, it is possible to open the ceiling above the nacelle base plate 42. As a result, it is possible to easily perform transportation of equipments to be housed in the nacelle upon installation, destruction or maintenance of a wind turbine generator 1. For instance, in the case where an equipment is lifted and transferred by a crane attached to the connection frame 35, opening the ceiling of the nacelle 40 makes it easier to attach the crane to the connection frame 35, and enables transportation of equipments between inside and outside of the nacelle 40. Especially, it is even possible to transfer an equipment of large size such as the hydraulic pump 12 or the generator 16 provided on the nacelle base plate 42.

Further, an access deck 90 which can be accessed by a helicopter may be provided at an upper face of the nacelle 40. By providing the access deck 90 at the upper face of the nacelle 40, it is possible to easily carry equipments in and out. For instance, it is possible to lift down and place an equipment once on the access deck 90 at the upper face of the nacelle while a helicopter is hovering and then carry the equipment into the nacelle 40 through the opening 412 at the ceiling of the nacelle 40.

Moreover, at least one cooling duct 70 may be provided at a rear part of the nacelle 40 at a side further from the hub 4. The cooling duct 70 may be supported by the nacelle frame 44. Also, a filter 72 may be attached to an inlet and an outlet of the cooling duct 70. In the nacelle 40, a plurality of heat sources such as a hydraulic pump and a generator exists. Thus, by providing the cooling duct 70, it is possible to release the heat generated from the heat sources to the outside of the nacelle 40. Also, as equipments such as the main bearing of the rotation shaft 6 and the hydraulic pump 12 are provided over the front to the middle of the nacelle, supporting the cooling duct 70 by the nacelle frame 44 at the rear part of the nacelle makes it possible to prevent the nacelle 40 from increasing in size.

Fig. 10 is an oblique perspective view of a nacelle to which a crane is attached.

In one embodiment, the connection frame 35 may include an attachment part 80 for a crane 82 for lifting up and down an equipment which is to be housed in the nacelle 40. In this case, a jib of the crane 82 is fastened and fixed to the crane attachment part 80 using an arbitrary fastening member. The jib of the crane 82 may be configured to rotate around the crane attachment 80 as the center. For instance, upon maintenance of equipments, the opening 412 is opened by sliding the slide plates 414a, 414b at the ceiling of the nacelle 40 and the crane 82 is attached to the crane attachment part 80. Then, an equipment 64 in the nacelle 40 is lifted up by the crane 82 and carried out. As described above, the crane 82 may be used for transportation of the equipment 64 in the nacelle 40.

As the connection frame 35 is supported on the nacelle base plate 42 via the main bearing, the main bearing and the nacelle base plate 42 are normally designed to have high stiffness for supporting the rotation shaft 6. Accordingly, it is even possible to lift an equipment of heavy weight by attaching the crane 82 to the connection frame 35.

As described above, in some embodiments, as the common base plate 46 where the hydraulic motor 14 and the generator 16 are installed is provided separately from the nacelle base plate 42 where the rotation shaft 6 is supported via the main bearing, it is possible to reduce weight of the nacelle 40 as a whole.

Also, by installing both of the hydraulic motor 14 and the generator 16 on one same plate (the common base plate 46), the moments acting on the common base plate 46 in opposite directions from the hydraulic motor 14 and the generator 16 respectively cancel each other. As a result, it is possible to reduce weight of each of the common base plate 46 and the structure which supports the common base plate 46 on the nacelle base plate 42, and thus to further reduce weight of the nacelle 40 as a whole.

Embodiments of the present invention were described in detail above, but the present invention is not limited thereto, and various amendments and modifications may be implemented within the scope of the present invention.

### [Reference Signs list]

- 1: Wind turbine generator
- 2: Blade
- 3: Rotor
- 4: Hub
- 5: Hub cover
- 6: Rotation shaft
- 6a: Flange
- 8: Tower
- 10: Hydraulic transmission
- 12: Hydraulic pump
- 13: High pressure oil line
- 14: Hydraulic motor
- 15: Low pressure oil line
- 16: Generator
- 17: Output axis
- 20: Yaw bearing
- 22: Outer race
- 23: Rolling element
- 24: Inner race
- 25: Yaw motor
- 26: Pinion gear
- 27: Ring gear
- 32: Front bearing
- 32a: Bearing body
- 32b: Bearing housing
- 34: Rear housing
- 35: Connection frame
- 36: Connection plate
- 37: Support
- 40: Nacelle
- 41: Nacelle cover
- 42: Nacelle base plate
- 43a: Side flange
- 43b: Rear flange
- 43c: Front flange
- 44: Nacelle frame
- 45: Side nacelle frame
- 46: Common base plate
- 47: Rear nacelle frame
- 47a: Rear floor plate
- 48: Equipment base plate
- 48a: Equipment base plate
- 49: Front nacelle frame
- 50: Brake mechanism
- 51: Fastened part
- 52: Intermediate part
- 53: Disc part
- 54: Brake caliper
- 55: Brake pad
- 56: Support member
- 59: Bolt
- 60, 62, 64: Equipment
- 70: Cooling duct
- 72: Filter
- 80: Crane attachment part
- 82: Crane
- 90: Access deck
- 410: Nacelle cover body
- 412: Opening
- 414a, 414b, 414c: Slide plate
- 420: Horizontal plate part
- 420a: Holding hole
- 421: Yaw deck
- 422, 423: Recess
- 424: Wall part
- 426: Rib
- 427: Opening
- 429: Base plate opening

## Claims

1. A power generating apparatus (1) of renewable energy type which generates power using renewable energy, comprising:
a tower (8);
at least one blade (2);
a hub (4) to which the at least one blade is attached;
a rotation shaft (6) connected to the hub;
a nacelle (40) including a nacelle base plate (42) attached to the tower (8) and a common base plate (46) formed separately from the nacelle base plate and supported by the nacelle base plate;
a main bearing (32,34) supporting the rotation shaft rotatably to the nacelle base plate (42);
a hydraulic pump (12) attached to the rotation shaft and configured to produce pressurized oil by rotation of the rotation shaft;
a hydraulic motor (14) configured to be driven by the pressurized oil from the hydraulic pump; and
a generator (16) configured to be driven by the hydraulic motor,
wherein the hydraulic motor and the generator are installed on the common base plate (46).

2. The power generating apparatus of renewable energy type according to claim 1, further comprising:
a yaw deck (421) protruding sideways from the nacelle base plate (42);
a yaw bearing (20) disposed between the tower (8) and the nacelle base plate (42); and
a yaw driving mechanism disposed on the yaw deck and configured to rotate the nacelle base plate (42) in a yaw direction with respect to the tower,
wherein the common base plate (46) is disposed at a higher position than the yaw deck (421), and
wherein the yaw deck forms a first floor where the yaw driving mechanism is provided, and the common base plate forms a second floor where at least the hydraulic motor (14) and the generator (16) are provided, the second floor being disposed above the first floor.

3. The power generating apparatus of renewable energy type according to claim 2, wherein the nacelle (40) has a multiple-layered structure which includes the first floor and the second floor, and further includes a nacelle frame (44) attached to the nacelle base plate (42).

4. The power generating apparatus of renewable energy type according to claim 1, wherein the nacelle base plate (42) includes a horizontal part which extends horizontally, a wall part (424) which is provided on the horizontal part and which has a pair of inner wall surfaces of the wall part facing each other across the rotation shaft (6), and a rib (426) provided between the pair of inner wall surfaces of the wall part to extend along a perpendicular direction of an axial direction of the rotation shaft (6), and
wherein the rib has an opening (427) for providing access to a maintenance space surrounded by the horizontal part, the wall part and the rib.

5. The power generating apparatus of renewable energy type according to claim 1, wherein the nacelle (40) further includes a side nacelle frame (45) which is attached to the nacelle base plate (42) and which forms a maintenance space for the rotation shaft beside the rotation shaft.

6. The power generating apparatus of renewable energy type according to claim 1, further comprising a brake mechanism (50) including a brake disc (51,52,53) fastened to the hub (4) and the rotation shaft (6), and a brake caliper (54) attached to a bearing housing (32b) which houses the main bearing and configured to force a brake pad (55) against the brake disc to apply a braking force to the rotation shaft (6),
wherein the nacelle includes a front nacelle frame (49) attached to the nacelle base plate (42) so as to protrude to a front side of the brake disc, the front nacelle frame forming a maintenance space for the brake mechanism (50).

7. The power generating apparatus of renewable energy type according to claim 1,
wherein the nacelle (40) includes a rear nacelle frame (47) attached to the nacelle base plate (42) so as to protrude to a rear side of the nacelle, and
wherein the rear nacelle frame is fastened to a flange face formed at a rear part of the nacelle base plate by a bolt.

8. The power generating apparatus of renewable energy type according to claim 7, wherein the nacelle (40) includes a rear floor plate (47a) which is supported by the nacelle frame (44) so as to form a rear floor in the nacelle.

9. The power generating apparatus of renewable energy type according to claim 1, wherein the main bearing includes a pair of a front bearing (32) and a rear bearing (34) disposed between the hub (4) and the hydraulic pump (12),
wherein the main bearing further includes a connection frame (35) for connecting the front bearing at a side close to the hub and the rear bearing at a side close to the hydraulic pump, and
wherein the connection frame is attached to the nacelle base plate (42).

10. The power generating apparatus of renewable energy type according to claim 9, wherein the connection frame includes an attachment part (80) for a crane (82) for lifting up and down an equipment (60,62,64) which is to be housed in the nacelle.

11. The power generating apparatus of renewable energy type according to claim 1, wherein the nacelle (40) is configured to be openable at a ceiling of the nacelle above the nacelle base plate (42).

12. The power generating apparatus of renewable energy type according to claim 11,
wherein the ceiling includes at least one opening (412) which communicates with outside and which is used for maintaining the equipment housed in the nacelle (40).

13. The power generating apparatus of renewable energy type according to claim 11,
wherein the ceiling includes at least one opening (412) and at least one cover for closing the opening, and
wherein the at least one cover is configured slidable so as to open the at least one opening when lifting up and down an equipment which is to be housed in the nacelle (40) by a crane (82).

14. The power generating apparatus of renewable energy type according to claim 1, wherein an access deck (90) for providing access for a helicopter is provided at an upper face of the nacelle (40).

15. The power generating apparatus of renewable energy type according to claim 3, further comprising at least one cooling duct (70) attached to a rear part of the nacelle (40) at a side further from the hub (4),
wherein the cooling duct is supported by the nacelle frame (44).

16. The power generating apparatus of renewable energy type according to claim 1, wherein the nacelle further includes: a nacelle frame (44) which is attached to the nacelle base plate (42) and which supports at least the common base plate; and a nacelle cover (41) disposed so as to cover an equipment housed in the nacelle.

17. The power generating apparatus of renewable energy type according to claim 16,
wherein the nacelle cover (41) is formed of one or more materials selected from the group consisting of fiber-reinforced plastic, aluminum, and alloyed aluminum.

18. The power generating apparatus of renewable energy type according to claim 1, wherein the nacelle base plate (42) is formed by casting.

19. The power generating apparatus of renewable energy type according to claim 1, wherein the nacelle frame (44) is formed of mold steel.

## Patentansprüche

1. Stromerzeugungsvorrichtung (1) vom Typ mit erneuerbarer Energie, welche Strom mittels erneuerbarer Energie erzeugt, umfassend:
einen Turm (8),
mindestens ein Rotorblatt (2),
eine Nabe (4), an der das mindestens eine Rotorblatt befestigt ist,
eine Drehwelle (6), die mit der Nabe verbunden ist,
eine Gondel (40), die eine Gondelbasisplatte (42), welche an dem Turm (8) befestigt ist, und eine gemeinsame Basisplatte (46), die getrennt von der Gondelbasisplatte ausgebildet ist und durch die Gondelbasisplatte getragen wird, umfasst,
ein Hauptlager (32, 34), das die Drehwelle drehbar zu der Gondelbasisplatte (42) trägt,
eine Hydraulikpumpe (12), die an der Drehwelle befestigt ist und dazu ausgebildet ist, durch Drehung der Drehwelle Drucköl zu erzeugen,
einen Hydraulikmotor (14), der dazu ausgebildet ist, durch das Drucköl von der Hydraulikpumpe angetrieben zu werden, und
einen Generator (16), der dazu ausgebildet ist, durch den Hydraulikmotor angetrieben zu werden,
wobei der Hydraulikmotor und der Generator auf der gemeinsamen Basisplatte (46) angebracht sind.

2. Stromerzeugungsvorrichtung vom Typ mit erneuerbarer Energie nach Anspruch 1, ferner umfassend:
ein Yaw-Deck (421), das in seitlicher Richtung von der Gondelbasisplatte (42) vorragt,
ein Yaw-Lager (20), das zwischen dem Turm (8) und der Gondelbasisplatte (42) angeordnet ist, und
einen Yaw-Antriebsmechanismus, der auf dem Yaw-Deck angeordnet ist und dazu ausgebildet ist, die Gondelbasisplatte (42) in eine Yaw-Richtung in Bezug auf den Turm zu drehen,
wobei die gemeinsame Basisplatte (46) an einer höheren Position als das Yaw-Deck (421) angeordnet ist, und
wobei das Yaw-Deck einen ersten Boden bildet, wo der Yaw-Antriebsmechanismus vorgesehen ist, und die gemeinsame Basisplatte einen zweiten Boden bildet, wo mindestens der Hydraulikmotor (14) und der Generator (16) vorgesehen sind, wobei der zweite Boden über dem ersten Boden angeordnet ist.

3. Stromerzeugungsvorrichtung vom Typ mit erneuerbarer Energie nach Anspruch 2,
wobei die Gondel (40) eine Mehrebenenstruktur aufweist, die den ersten Boden und den zweiten Boden umfasst, und ferner einen Gondelrahmen (44) umfasst, der an der Gondelbasisplatte (42) befestigt ist.

4. Stromerzeugungsvorrichtung vom Typ mit erneuerbarer Energie nach Anspruch 1,
wobei die Gondelbasisplatte (42) umfasst: einen waagrechten Teil, der sich waagrecht erstreckt, einen Wandteil (424), der an dem waagrechten Teil vorgesehen ist und der ein Paar von inneren Wandoberflächen des Wandteils aufweist, die einander über die Drehwelle (6) gegenüberliegen, und eine Rippe (426), die zwischen dem Paar von inneren Wandoberflächen des Wandteils vorgesehen ist, um sich entlang einer zu der axialen Richtung der Drehwelle (6) rechtwinkeligen Richtung zu erstrecken, und
wobei die Rippe eine Öffnung (427) zum Vorsehen von Zugang zu einem Wartungsraum aufweist, der von dem waagrechten Teil, dem Wandteil und der Rippe umgeben ist.

5. Stromerzeugungsvorrichtung vom Typ mit erneuerbarer Energie nach Anspruch 1,
wobei die Gondel (40) ferner einen Gondelseitenrahmen (45) umfasst, der an der Gondelbasisplatte (42) befestigt ist und der neben der Drehwelle einen Wartungsraum für die Drehwelle bildet.

6. Stromerzeugungsvorrichtung vom Typ mit erneuerbarer Energie nach Anspruch 1,
ferner umfassend einen Bremsmechanismus (50), der eine Bremsscheibe (51, 52, 53), die an der Nabe (4) und der Drehwelle (6) befestigt ist, und eine Bremszange (54), die an einem Lagergehäuse (32b) befestigt ist, welches das Hauptlager aufnimmt, umfasst und dazu ausgebildet ist, einen Bremsklotz (55) gegen die Bremsscheibe zu drücken, um eine Bremskraft auf die Drehwelle (6) aufzubringen,
wobei die Gondel einen vorderen Gondelrahmen (49) umfasst, der an der Gondelbasisplatte (42) derart befestigt ist, dass er zu einer Vorderseite der Bremsscheibe vorragt, wobei der vordere Gondelrahmen einen Wartungsraum für den Bremsmechanismus (50) bildet.

7. Stromerzeugungsvorrichtung vom Typ mit erneuerbarer Energie nach Anspruch 1,
wobei die Gondel (40) einen hinteren Gondelrahmen (47) umfasst, der an der Gondelbasisplatte (42) derart befestigt ist, dass er zu einer Rückseite der Gondel vorragt, und
wobei der hintere Gondelrahmen an einer Flanschfläche, die an einem hinteren Teil der Gondelbasisplatte ausgebildet ist, durch eine Schraube befestigt ist.

8. Stromerzeugungsvorrichtung vom Typ mit erneuerbarer Energie nach Anspruch 7,
wobei die Gondel (40) eine hintere Bodenplatte (47a) umfasst, die durch den Gondelrahmen (44) getragen wird, um einen hinteren Boden in der Gondel zu bilden.

9. Stromerzeugungsvorrichtung vom Typ mit erneuerbarer Energie nach Anspruch 1,
wobei das Hauptlager ein Paar aus einem vorderen Lager (32) und einem hinteren Lager (34) umfasst, das zwischen der Nabe (4) und der Hydraulikpumpe (12) angeordnet ist,
wobei das Hauptlager ferner einen Verbindungsrahmen (35) zum Verbinden des vorderen Lagers auf einer der Nabe nahen Seite und des hinteren Lagers auf einer der Hydraulikpumpe nahen Seite umfasst, und
wobei der Verbindungsrahmen an der Gondelbasisplatte (42) befestigt ist.

10. Stromerzeugungsvorrichtung vom Typ mit erneuerbarer Energie nach Anspruch 9,
wobei der Verbindungsrahmen einen Befestigungsteil (80) für einen Kran (82) zum Heben und Absenken einer Ausrüstung (60, 62, 64), die in der Gondel untergebracht werden soll, umfasst.

11. Stromerzeugungsvorrichtung vom Typ mit erneuerbarer Energie nach Anspruch 1,
wobei die Gondel (40) dazu ausgebildet ist, an einer Decke der Gondel über der Gondelbasisplatte (42) geöffnet werden zu können.

12. Stromerzeugungsvorrichtung vom Typ mit erneuerbarer Energie nach Anspruch 11,
wobei die Decke mindestens eine Öffnung (412) umfasst, die mit dem Äußeren kommuniziert und die zum Instandhalten der Ausrüstung, die in der Gondel (40) aufgenommen wird, verwendet wird.

13. Stromerzeugungsvorrichtung vom Typ mit erneuerbarer Energie nach Anspruch 11,
wobei die Decke mindestens eine Öffnung (412) und mindestens eine Abdeckung zum Schließen der Öffnung umfasst, und
wobei die mindestens eine Abdeckung verschiebbar ausgebildet ist, um die mindestens eine Öffnung zu öffnen, wenn eine Ausrüstung, die in der Gondel (40) untergebracht werden soll, durch einen Kran (82) gehoben oder abgesenkt wird.

14. Stromerzeugungsvorrichtung vom Typ mit erneuerbarer Energie nach Anspruch 1,
wobei ein Zugangsdeck (90) zum Ermöglichen von Zugang für einen Helikopter an einer oberen Fläche der Gondel (40) vorgesehen ist.

15. Stromerzeugungsvorrichtung vom Typ mit erneuerbarer Energie nach Anspruch 3,
ferner umfassend mindestens einen Kühlkanal (70), der an einem hinteren Teil der Gondel (40) auf einer der Nabe (4) fernen Seite befestigt ist,
wobei der Kühlkanal durch den Gondelrahmen (44) getragen wird.

16. Stromerzeugungsvorrichtung vom Typ mit erneuerbarer Energie nach Anspruch 1,
wobei die Gondel ferner umfasst: einen Gondelrahmen (44), der an der Gondelbasisplatte (42) befestigt ist und der mindestens die gemeinsame Basisplatte trägt, und eine Gondelabdeckung (41), die angeordnet ist, um eine Ausrüstung, die in der Gondel untergebracht ist, abzudecken.

17. Stromerzeugungsvorrichtung vom Typ mit erneuerbarer Energie nach Anspruch 16,
wobei die Gondelabdeckung (41) aus einem oder mehreren Materialien gebildet ist, die aus der Gruppe umfassend faserverstärkten Kunststoff, Aluminium und legiertes Aluminium ausgewählt werden.

18. Stromerzeugungsvorrichtung vom Typ mit erneuerbarer Energie nach Anspruch 1,
wobei die Gondelbasisplatte (42) durch Gießen gebildet wird.

19. Stromerzeugungsvorrichtung vom Typ mit erneuerbarer Energie nach Anspruch 1, wobei der Gondelrahmen (44) aus Formstahl gebildet ist.

## Revendications

1. Appareil de génération d'énergie (1) du type à énergie renouvelable qui génère de l'énergie en utilisant de l'énergie renouvelable, comportant :
une tour (8) ;
au moins une pale (2) ;
un moyeu (4) sur lequel la au moins une pale est fixée ;
un arbre de rotation (6) relié au moyeu ;
une nacelle (40) comprenant une embase de nacelle (42) fixée sur la tour (8) et une embase commune (46) formée séparément de l'embase de nacelle et supportée par l'embase de nacelle ;
un palier principal (32, 34) supportant l'arbre de rotation de façon rotative sur l'embase de nacelle (42) ;
une pompe hydraulique (12) fixée sur l'arbre de rotation et configurée pour produire de l'huile sous pression par rotation de l'arbre de rotation ;
un moteur hydraulique (14) configuré pour être entraîné par l'huile sous pression provenant de la pompe hydraulique ; et
une génératrice (16) configurée pour être entraînée par le moteur hydraulique,
dans lequel le moteur hydraulique et la génératrice sont installés sur l'embase commune (46).

2. Appareil de génération d'énergie du type à énergie renouvelable selon la revendication 1, comportant en outre :
une plate-forme de lacet (421) qui dépasse latéralement de l'embase de nacelle (42) ;
un palier de lacet (20) disposé entre la tour (8) et l'embase de nacelle (42) ; et
un dispositif d'entraînement en lacet disposé sur la plate-forme de lacet et configuré pour faire tourner l'embase de nacelle (42) dans une direction de lacet par rapport à la tour,
dans lequel l'embase commune (46) est disposée dans une position plus élevée que la plate-forme de lacet (421), et
dans lequel la plate-forme de lacet forme un premier plancher où le dispositif d'entraînement en lacet est prévu, et l'embase commune forme un deuxième plancher où au moins le moteur hydraulique (14) et la génératrice (16) sont prévus, le deuxième plancher étant disposé au-dessus du premier plancher.

3. Appareil de génération d'énergie du type à énergie renouvelable selon la revendication 2,
dans lequel la nacelle (40) a une structure multicouche qui comprend le premier plancher et le deuxième plancher, et comprend en outre un bâti de nacelle (44) fixé sur l'embase de nacelle (42).

4. Appareil de génération d'énergie du type à énergie renouvelable selon la revendication 1,
dans lequel l'embase de nacelle (42) comprend une partie horizontale qui s'étend horizontalement, une partie de paroi (424) qui est prévue sur la partie horizontale et qui a une paire de surfaces de paroi intérieures de la partie de paroi se faisant face de part et d'autre de l'arbre de rotation (6), et une nervure (426) prévue entre la paire de surfaces de paroi intérieures de la partie de paroi pour s'étendre le long d'une direction perpendiculaire d'une direction axiale de l'arbre de rotation (6), et
dans lequel la nervure a une ouverture (427) pour permettre d'accéder à un espace d'entretien entouré par la partie horizontale, la partie de paroi et la nervure.

5. Appareil de génération d'énergie du type à énergie renouvelable selon la revendication 1,
dans lequel la nacelle (40) comprend en outre un bâti latéral de nacelle (45) qui est fixé sur l'embase de nacelle (42) et qui forme un espace d'entretien pour l'arbre de rotation près de l'arbre de rotation.

6. Appareil de génération d'énergie du type à énergie renouvelable selon la revendication 1,
comportant en outre un mécanisme de frein (50) comprenant un disque de frein (51, 52, 53) fixé sur le moyeu (4) et l'arbre de rotation (6), et un étrier de frein (54) fixé sur un logement de palier (32b) qui renferme le palier principal et configuré pour forcer une garniture de frein (55) contre le disque de frein pour appliquer une force de freinage sur l'arbre de rotation (6),
dans lequel la nacelle comprend un bâti avant de nacelle (49) fixé sur l'embase de nacelle (42) de façon à dépasser vers un côté avant du disque de frein, le bâti avant de nacelle formant un espace d'entretien pour le mécanisme de frein (50).

7. Appareil de génération d'énergie du type à énergie renouvelable selon la revendication 1,
dans lequel la nacelle (40) comprend un bâti arrière de nacelle (47) fixé sur l'embase de nacelle (42) de façon à dépasser vers un côté arrière de la nacelle, et
dans lequel le bâti arrière de nacelle est fixé sur une face de bride formée au niveau d'une partie arrière de l'embase de nacelle par un boulon.

8. Appareil de génération d'énergie du type à énergie renouvelable selon la revendication 7,
dans lequel la nacelle (40) comprend une plaque de plancher arrière (47a) qui est supportée par le bâti de nacelle (44) de façon à former un plancher arrière dans la nacelle.

9. Appareil de génération d'énergie du type à énergie renouvelable selon la revendication 1,
dans lequel le palier principal comprend une paire d'un palier avant (32) et d'un palier arrière (34) disposé entre le moyeu (4) et la pompe hydraulique (12),
dans lequel le palier principal comprend en outre un bâti de raccordement (35) pour relier le palier avant sur un côté proche du moyeu et le palier arrière sur un côté proche de la pompe hydraulique, et
dans lequel le bâti de raccordement est fixé sur l'embase de nacelle (42).

10. Appareil de génération d'énergie du type à énergie renouvelable selon la revendication 9,
dans lequel le bâti de raccordement comprend une partie de fixation (80) pour une grue (82) destinée à monter et descendre un équipement (60, 62, 64) qui doit être logé dans la nacelle.

11. Appareil de génération d'énergie du type à énergie renouvelable selon la revendication 1,
dans lequel la nacelle (40) est configurée pour pouvoir être ouverte au niveau d'un plafond de la nacelle au-dessus de l'embase de nacelle (42).

12. Appareil de génération d'énergie du type à énergie renouvelable selon la revendication 11,
dans lequel le plafond comprend au moins une ouverture (412) qui communique avec extérieur et qui est utilisée pour l'entretien de l'équipement logé dans la nacelle (40).

13. Appareil de génération d'énergie du type à énergie renouvelable selon la revendication 11,
dans lequel le plafond comprend au moins une ouverture (412) et au moins un couvercle pour fermer l'ouverture, et
dans lequel le au moins un couvercle est configuré pour pouvoir coulisser de façon à ouvrir la au moins une ouverture lors de la montée et de la descente d'un équipement qui doit être logé dans la nacelle (40) grâce à une grue (82).

14. Appareil de génération d'énergie du type à énergie renouvelable selon la revendication 1,
dans lequel une plate-forme d'accès (90) pour fournir l'accès pour un hélicoptère est prévue au niveau d'une face supérieure de la nacelle (40).

15. Appareil de génération d'énergie du type à énergie renouvelable selon la revendication 3,
comportant en outre au moins un conduit de refroidissement (70) fixé sur une partie arrière de la nacelle (40) sur un côté éloigné du moyeu (4),
dans lequel le conduit de refroidissement est supporté par le bâti de nacelle (44).

16. Appareil de génération d'énergie du type à énergie renouvelable selon la revendication 1,
dans lequel la nacelle comprend en outre : un bâti de nacelle (44) qui est fixé sur l'embase de nacelle (42) et qui supporte au moins l'embase commune ; et
un couvercle de nacelle (41) disposé de façon à recouvrir un équipement logé dans la nacelle.

17. Appareil de génération d'énergie du type à énergie renouvelable selon la revendication 16,
dans lequel le couvercle de nacelle (41) est constitué d'un ou plusieurs matériaux choisis dans le groupe de la matière plastique renforcée de fibres, de l'aluminium, et de l'aluminium allié.

18. Appareil de génération d'énergie du type à énergie renouvelable selon la revendication 1, dans lequel l'embase de nacelle (42) est formée par coulée.

19. Appareil de génération d'énergie du type à énergie renouvelable selon la revendication 1, dans lequel le bâti de nacelle (44) est formé en acier moulé.
